Europäisches Patentamt

European Patent Office

Office européen des brevets

(19)

(11) Numéro de publication : **0 540 422 A1**

## (12) DEMANDE DE BREVET EUROPEEN

(21) Numéro de dépôt : **92402940.8**

(22) Date de dépôt : **29.10.92**

(51) Int. Cl.⁵ : **F16D 3/84**

(30) Priorité : **30.10.91 FR 9113393**

(43) Date de publication de la demande :
**05.05.93 Bulletin 93/18**

(84) Etats contractants désignés :
**DE ES FR GB IT**

(71) Demandeur : **GLAENZER SPICER**
**10 Rue J.P. Timbaud**
**F-78301 Poissy (FR)**

(72) Inventeur : **Orain, Michel**
**10 rue des Côtes de Vannes**
**F-78700 Conflans Ste Honorine (FR)**

(74) Mandataire : **Kohn, Philippe et al**
**c/o CABINET LAVOIX 2, place d'Estienne**
**d'Orves**
**F-75441 Paris Cédex 09 (FR)**

(54) **Dispositif de protection et de retenue de lubrifiant pour joint de transmission articulé, et joint homocinétique ainsi équipé.**

(57) Le joint de transmission (1) articulé, homoci-nétique, comprend un fût (12) entraîné en rota-tion par un croisillon (4) relié à un arbre (2).

Un raccord tubulaire rigide étanche (15) enve-loppe l'arbre de transmission (2). Il est fixé par une de ses extrémités (15a) au fût (12) par l'intermédiaire d'un premier organe annulaire (16) solidaire de l'extrémité (15a) et du fût (12), et qui est déformable élastiquement selon un angle de travail (B). L'autre extrémité (15b) du raccord (15) est libre en coulissement sur l'arbre de transmission (2) par l'intermédiaire d'un fourreau rigide coulissant (17) entraîné axiale-ment par un second organe annulaire (18) déformable élastiquement.

Utilisation pour les joints à grande vitesse, grande dimension ou forte angularité usuelle de travail.

FIG.3

EP 0 540 422 A1

La présente invention concerne un dispositif de protection et de retenue de lubrifiant pour joint de transmission articulé, notamment joint homocinétique, destiné à assurer l'accouplement entre deux organes tournants, susceptibles de travailler sous angle.

La présente invention concerne également un joint homocinétique équipé d'un tel dispositif.

Il est connu par exemple dans le domaine de l'automobile d'assurer la retenue du lubrifiant et la protection indispensable au fonctionnement du mécanisme des joints homocinétiques équipant les arbres de transmission, par l'intermédiaire de soufflets élastiques reliant un bord ouvert d'un élément extérieur du joint, généralement en forme de fût, et le pourtour d'un arbre relié à un élément intérieur du joint, tel qu'un tripode ou croisillon.

Ces soufflets doivent remplir deux impératifs techniques difficilement conciliables :

- d'une part fermer d'une manière fiable et parfaite l'espace compris entre le fût extérieur du joint et l'arbre intérieur de manière à constituer une enceinte close hermétiquement, contenant le mécanisme et le lubrifiant ;
- d'autre part être assez déformable pour assurer la pérennité de cette fermeture souple alors que l'arbre se débat angulairement et le cas échéant (dans le cas de joints coulissants) axialement relativement au fût, et que le soufflet est déformé cycliquement à une fréquence égale à la vitesse de rotation du joint lorsque le joint travaille sous angle ;
- et en même temps, être assez rigide pour que la constante de rappel élastique en position neutre des plis soit suffisamment élevée pour leur assurer, en dépit de l'inertie du lubrifiant, une fréquence propre supérieure à la vitesse de rotation, pour que le soufflet tende à revenir de lui-même a sa position neutre, à une vitesse au mins égale à celle correspondant à la vitesse maximale de rotation et malgré le lubrifiant qui le charge intérieurement.

De nombreux travaux ont été effectués pour mettre au point des élastomères pour ces soufflets ainsi que des profils performants et des fixations adaptés aux applications de l'automobile (voir FR-A-1 342 249, 1 347 808, 1 347 809, 1 399 682, 1 482 069).

Les parties actives de ces soufflets ou plis présentent un diamètre que l'on s'efforce de maintenir en-dessous de 100mm pour des raisons de fiabilité, de stabilité et d'endurance. Ces soufflets donnent globalement satisfaction pour les cas d'utilisation les plus courants.

Il n'en demeure pas moins que la fiabilité et la longévité des soufflets conditionnent l'endurance des mécanismes homocinétiques qui ne survivent pas à la perte de lubrifiant consécutive à la détérioration de ces soufflets.

On peut considérer en effet, qu'environ 90 % des mises hors service des joints homocinétiques sont initiées par la crevaison du soufflet et la perte du lubrifiant. Cette faiblesse est aggravée lorsque les joints articulés doivent tourner à haute vitesse disons entre 2.000 et 10.000 tours minute ou/et présenter un diamètre excédant 100mm, disons pour des vitesses périphériques situées entre 15 et 50 mètres par seconde.

En effet :
- en un même laps de temps le nombre d'alternances de la contrainte de flexion dans l'élastomère croît comme la vitesse de rotation, et la fatigue du matériau croît de même,
- les forces inertielles croissant comme le carré des vitesses, augmentent considérablement les contraintes,
- la pression centrifuge dans le lubrifiant croît comme le carré de la vitesse de rotation et comme le carré de la chaleur dynamique du lubrifiant et requiert une très grande résistance à l'éclatement des parois élastiques des soufflets,
- les mouvements axiaux de l'arbre des joints coulissants, compression et extension, sont accompagnés de supression ou de dépression s'exerçant dans l'enceinte du mécanisme. Or ces modifications de la pression relative altèrent le profil des plis de manière erratique et deviennent inacceptables pour les joints de grand diamètre,
- la durée de vie exigée peut dans certains cas (transports ferroviaires et maritimes) être bien supérieure à celle permise par les soufflets élastiques,
- enfin les applications aux véhicules toutterrain, de travaux publics, ou travaillant dans des conditions de températures extrêmes, multiplient les probabilités d'agressions mécaniques et les risques de déchirures et de perforations des soufflets conventionnels.

La paroi élastique du soufflet, de par sa masse et celle du lubrifiant retenu, et les forces centrifuges qui en résultent, présente une tendance à l'instabilité radiale similaire à celle d'un arbre de transmission au voisinage de sa vitesse critique. Cette tendance ne peut être combattue qu'en accroissant l'épaisseur de cette paroi et la rigidité du matériau utilisé. Mais on la rendrait alors inapte à clore l'espace libre et variable entre l'arbre et le fût pendant la rotation du joint sous angle.

Par exemple pour un rayon de 125mm et une vitesse de rotation de 2.500 tours/minute la pression exercée par le lubrifiant sur la paroi du soufflet s'élèverait à 5kg/cm² environ, ce qui représente sensiblement la pression de gonflage de pneumatiques haute-pression.

On en arriverait à une structure armée ayant une rigidité et une inertie incompatibles avec la mobilité nécessaire à la fonction de fermeture du joint, en particulier avec les déformations cycliques lors du fonctionnement sous angle.

Depuis le début du développement industriel de l'automobile, les transmissions longitudinales des véhicules à propulsion par les roues arrière ont représenté l'essentiel des lignes d'arbres à haute vitesse, avec des vitesses de rotation sensiblement quadruples de celles des transmissions latérales des véhicules à traction avant. Le seul joint disponible sur le marché et utilisé massivement est le cardan, joint non homocinétique et non coulissant dont l'angularité continue est limitée à 3° ou 6° selon la vitesse de rotation et le degré de confort requis, le défaut d'homocinétie croissant comme le carré de l'angle de travail. Par contre, les quatre tourillonnements sur aiguilles des bras des croisillons sont protégés par des garnitures tournantes, jeu sensibles à la force centrifuge, fiables, faciles à installer et qui présentent une endurance très satisfaisante.

Pour des applications spéciales on a aussi utilisé des joints homocinétiques à billes et à tripodes sur des arbres à haute vitesse. Cependant il a fallu respecter des restrictions d'angularité encore plus sévères qu'avec le cardan, bien que pour des raisons techniques différentes. En effet, les joints à billes sont sujets à un échauffement et une usure croissant rapidement avec l'angularité et de leur côté les joints à tripodes présentent un mouvement relatif d'orbitage inacceptable. Pour ces joints homocinétiques à grande vitesse travaillant à des angles continus limités à 2 ou 4°, les soufflets élastiques de retenue de lubrifiant classiques sont en général considérés comme suffisamment fiables.

Or, l'introduction du joint homocinétique centré et à haut rendement décrit par le FR-A-2 566 858 et la demande française non publiée 91 08 048 permet l'installation de lignes de transmission à haute vitesse présentant des brisures continues de 10° à 15°. En effet, ce joint réunit les trois caractéristiques indispensables à la transmission de puissance à haute vitesse avec des angularités continues pratiquement triples de celles autorisées jusqu'alors car il est parfaitement homocinétique, parfaitement centré et peu sujet à l'échauffement et à l'usure. Ces qualités assurent donc le confort du véhicule et la longévité de la ligne d'arbre. Mais, la possibilité d'utiliser ce nouveau joint dépend de la disponibilité d'un dispositif de protection et de retenue de lubrifiant d'égales performances et endurance, c'est-à-dire, pouvant tourner à haute vitesse sous angle moyen continu de 10 à 15° et ayant une grande longévité dans des conditions extrêmes de températures et d'environnement.

Le but de la présente invention est de concevoir un dispositif de protection et de retenue de lubrifiant convenant pour les joints homocinétiques, coulissants ou non, qui fonctionnent dans des conditions extrêmes, de par leur taille, leur angle de travail usuel et/ou leur vitesse de rotation, ce dispositif devant présenter le cas échéant une fiabilité et une longévité à l'échelle du service attendu dans l'industrie des transports maritimes et ferroviaires.

A cet effet, selon un premier aspect de l'invention, le dispositif de protection et de retenue de lubrifiant pour joint de transmission articulé, notamment joint homocinétique, comprenant un élément extérieur et un élément intérieur relié à un arbre, l'élément extérieur ayant un bord ouvert autour de l'arbre, est caractérisé en ce qu'il comprend un raccord tubulaire rigide étanche qui entoure l'arbre avec un jeu radial et qui a une première extrémité reliée par une première articulation étanche au bord ouvert de l'élément extérieur et une deuxième extrémité, éloignée du bord ouvert, et reliée, par une deuxième articulation étanche, coulissante, à l'arbre, lequel se débat axialement et angulairement dans le raccord en fonction de l'angle de travail du joint.

Ainsi, le raccord tubulaire pivote par rapport au bord ouvert de l'organe extérieur, de manière à suivre les débattements angulaires de l'arbre. Mais comme le raccord ne peut pas, en général, avoir même centre de pivotement que l'arbre par rapport à l'organe extérieur du joint, l'orientation du raccord par rapport à l'arbre et la position axiale de la deuxième extrémité du raccord par rapport à l'arbre varient en fonction de la position angulaire de l'arbre par rapport à l'élément extérieur. Ceci est permis par l'articulation coulissante entre la deuxième extrémité du raccord et l'arbre.

De préférence, la première articulation a un centre situé à l'intérieur du premier élément. Pour chaque angle de travail du joint, ceci réduit les angles de travail des deux articulations du raccord tubulaire.

Chacune des articulations comprend de préférence un organe annulaire déformable, conformé pour avoir en service des déformations de cisaillement convenablement orientées correspondant globalement à un pivotement autour d'un centre de pivotement choisi. On peut orienter le cisaillement en plaçant dans l'organe annulaire au moins un cloisonnement sensiblement indéformable parallèlement à la direction de cisaillement voulue.

Selon un second aspect de l'invention, le joint de transmission articulée comprenant un élément extérieur comprenant un fût et quatre couloirs oscillant contre une paroi intérieure du fût et s'ouvrant vers un axe du fût, ces quatre couloirs étant accouplés entre eux pour osciller en opposition de phase, et un élément intérieur comprenant un croisillon dont quatre bras sont engagés chacun de manière mobile dans l'un des couloirs, est caractérisé en ce que le joint est équipé d'un dispositif de protection selon le premier aspect de la présente invention.

L'invention sera mieux comprise et d'autres caractéristiques de celle-ci seront mises en évidence a l'aide de la description qui suit en référence aux dessins schématiques annexés, illustrant au moyen d'exemples non limitatifs, comment l'invention peut être réalisée et dans lesquels :

- la figure 1 est une vue en élévation avec demi-coupe longitudinale d'un joint homocinétique coulissant selon un exemple de réalisation de l'invention, représenté en position alignée ;
- la figure 2 est une vue en bout, avec demi-coupe transversale, d'un joint selon la figure 1 ;
- la figure 3 est une vue en coupe longitudinale d'un joint selon la figure 1, représenté en travail sous angle, en position de compression maximale en haut de la figure et d'extension maximale en bas de la figure ;
- les figures 4 et 5 sont des vue en coupe longitudinale d'un joint homocinétique selon deux variantes de réalisation, représenté pour partie en position alignée et pour partie en travail sous angle ; et
- la figure 6 est un schéma théorique explicitant l'action centrifuge sur un organe annulaire déformable.

Dans les exemples représentés sur les figures, le joint de transmission homocinétique 1 désigné dans son ensemble, est un joint coulissant à quatre galets, connu en soi, du type décrit dans le FR-A-2 566 858 et qui ne sera donc pas redécrit en détail ci-après.

Pour l'essentiel un arbre de transmission 2 est fixé, par exemple par des cannelures 3, à l'intérieur d'un croisillon 4 qui appartient à l'élément intérieur du joint. Le croisillon 4 comporte quatre tourillons cylindriques 5 dont chacun supporte de manière coulissante un galet sphérique 6 par l'intermédiaire d'aiguilles 7 retenues par des coupelles 8 et des joncs 9. Ces galets roulent à l'intérieur de couloirs 10 s'articulant en 11 à l'intérieur d'un barillet ou fût 12 du joint coulissant. Le fût 12 a un bord ouvert 23 entourant l'arbre 2. En fonctionnement sous angle, chaque couloir 10 s'incline cycliquement en opposition de phase par rapport à ses deux voisins autour de l'articulation 11. L'opposition de phase est assurée par des accouplements intercouloir 10a. Le fût 12 et les couloirs 10 forment l'élément extérieur du joint. Dans l'application représentée, le fût 12 comporte une denture périphérique 12a pour son entraînement en rotation.

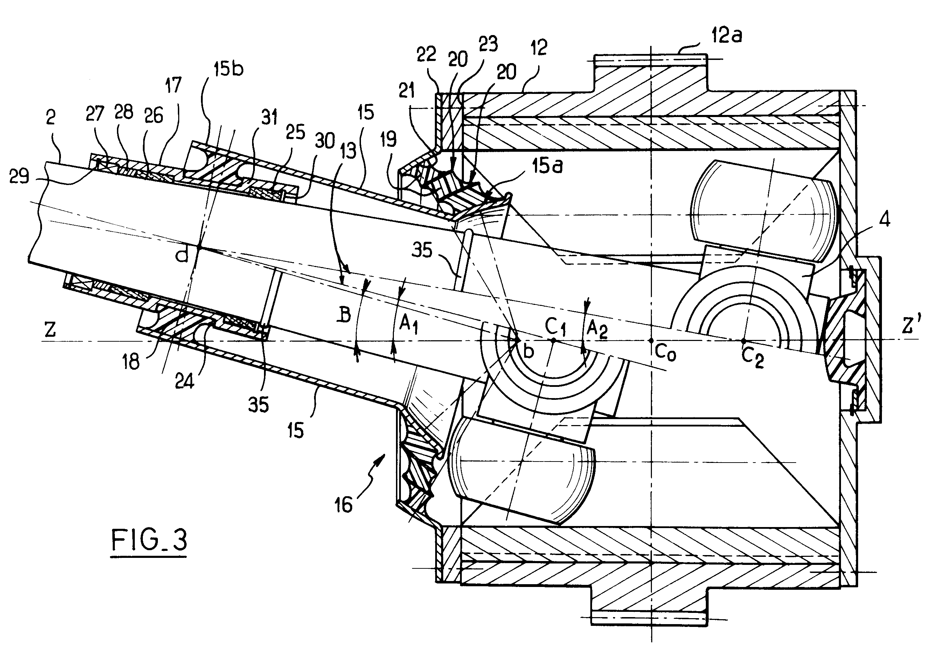

Le centre C0 du croisillon 4, qui est le centre géométrique d'articulation du fût par rapport à l'arbre, peut se déplacer le long de l'axe ZZ' jusqu'à C1 (figure 3), en élongation maximale du joint, et jusqu'en C2 en compression maximale du joint, pendant que l'axe 13 de l'arbre 2 peut dévier jusqu'à des angles A1 et respectivement A2 relativement à l'axe ZZ' du fût 12.

Le joint de transmission 1 est protégé par un dispositif 14 servant également à retenir le lubrifiant (non représenté) qui est incorporé dans le joint lors de sa fabrication.

Selon l'invention, le dispositif 14 comprend un raccord tubulaire rigide étanche 15 enveloppant avec un jeu radial une partie de la longueur de l'arbre de transmission 2. Le raccord 15 comprend une première extrémité 15a qui est reliée de manière étanche au bord ouvert 23 du fût 12 par l'intermédiaire d'une première articulation, de centre b, comprenant un premier organe annulaire 16 fixé à la première extrémité 15a et au bord 23. L'organe annulaire 16 est déformable élastiquement selon un angle de travail maximal "B" entre le fût 12 et le raccord 15. Le centre b de la première articulation est sur l'axe ZZ' du fût 12.

Une seconde extrémité 15b du raccord 15 est libre en coulissement sur l'arbre de transmission 2 par l'intermédiaire d'un fourreau rigide coulissant 17 entraîné axialement le long de l'arbre 2 par une seconde articulation, de centre d. Cette articulation comprend un second organe annulaire 18 déformable élastiquement, qui est fixé au fourreau 17 et à la seconde extrémité libre 15b du raccord tubulaire 15.

Avantageusement les premier et second organes annulaires 16, 18 sont réalisés en élastomère massif du genre caoutchouc.

Selon un mode de réalisation préférentiel, le premier organe annulaire 16 comporte une pluralité d'anneaux élémentaires concentriques 19 adhérisés sur des cloisonnements 20 disposés entre les anneaux et formés par des armatures métalliques minces en forme de zones sphériques centrées en "b" sur l'axe ZZ' du fût 12, ou de troncs de cône approximant de telles zones sphériques.

Ces cloisonnements 20 sensiblement indéformables ne permettent aux anneaux 19 que le cisaillement selon des directions tangentielles par rapport au centre b.

Ainsi, le mouvement du raccord 15 par rapport au fût 12 est sensiblement un mouvement de rotule autour du centre b. Les zones sphériques des cloisonnements 20 s'épanouissent vers l'intérieur du fût 12, de sorte que le centre "b" est déporté axialement vers l'intérieur du fût 12.

Un anneau 19, extérieur, du premier organe annulaire 16, est adhérisé ou fixé sur une face interne sphérique 21, centré en b, appartenant à un flasque 22 fixé contre le bord ouvert 23 du fût 12. Par ailleurs, un anneau 19 intérieur est adhérisé ou fixé sur une face extérieure de la première extrémité 15a du raccord 15, qui est épanouie de manière sphérique centrée en b, ou conique, vers l'intérieur du fût 12.

Le premier organe annulaire 16 a une section sensiblement trapézoïdale qui s'élargit vers l'axe ZZ'. Pour cela la largeur des anneaux élastiques 19 est décroissante depuis l'anneau intérieur jusqu'à l'anneau extérieur. De préférence, cette largeur est inversement proportionnelle au carré du rayon sphérique centré sur l'axe ZZ' du fût 12. Cette disposition répartit équitablement la déformation élastique tangentielle sur chacun des anneaux 19, et plus généralement dans l'ensemble de la matière élastique de l'organe 16.

Le second organe annulaire 18, disposé à proximité de l'extrémité 15b du raccord 15, est disposé radialement par rapport à un centre de flexion "d" situé sur l'axe 13 de l'arbre 2. Il est de section sensiblement trapézoïdale dont la grande base est proche de l'axe 13 pour répartir équitablement la déformation tangentielle dans la matière élastique. Le second organe annulaire 18 est de diamètre plus petit que celui du premier organe annulaire 16. Il se loge dans une gorge périphérique 24 ménagée sur la face externe du fourreau 17 et il reçoit, extérieurement, l'extrémité libre 15b du raccord tubulaire 15 auquel il est adhérisé.

La paroi intérieure du fourreau coulissant 17 est un alésage garni de deux bagues de guidage 25, 26 en matériau anti-friction, coulissant sur la surface de l'arbre de transmission 2 dont la surface comporte à son extrémité externe des garnitures de protection 27 et d'étanchéité 28.

Des bagues d'arrêt élastiques (29 ; 30 , figure 3) retiennent axialement bagues et garnitures dans le fourreau 17. Des ouvertures 31 percées dans le fourreau 17 entre les bagues de guidage 25 et 26 du côté intérieur de l'organe annulaire 18 permettent la lubrification de la bague de guidage extérieure 26.

L'amplitude B de l'oscillation du premier organe annulaire élastique 16 croît comme l'angularité du joint 1 mais aussi comme le rapport $\frac{\overline{bc}}{\overline{bd}}$ de la distance entre le centre naturel de flexion "b" et le centre $C_0$ du joint, à la distance entre le centre de flexion "b" au centre de flexion "d" du second organe élastique 18.

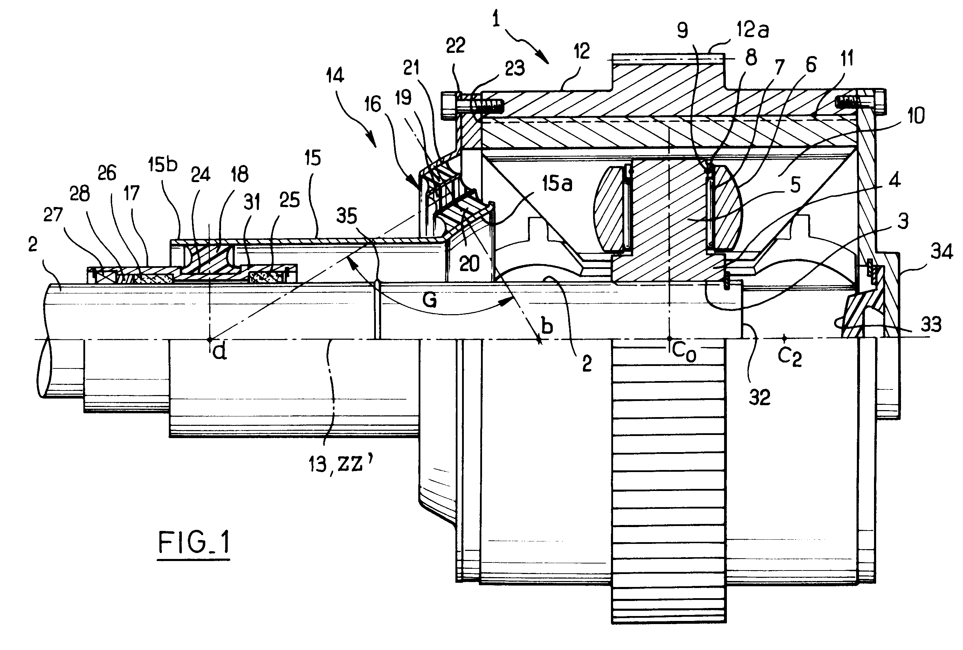

Afin de réduire la fatigue de flexion du premier organe annulaire notamment lorsque l'arbre (2) est comprimé, -croisillon 4 centré en $C_2$- la distance "bd" est accrue autant que le permet l'application envisagée, en allongeant autant que possible le raccord 15, et le centre de flexion privilégié "b" est déporté axialement vers l'intérieur du joint, selon l'invention, et correspond avantageusement à un angle "G" de 90° (figure 1). On appelle "G" l'angle séparant les centres b et d lorsqu'ils sont vus depuis le centre de la section droite de l'organe 16. Cette disposition permet de plus de contrecarrer l'effet de la pression centrifuge du lubrifiant sur la face interne du premier organe annulaire 16, par mise en compression radiale des anneaux élastiques élémentaires 19 contre leurs armatures 20. Par ailleurs, cette compression exerce un effet bénéfique améliorant la tenue en fatigue de déformation tangentielle de l'élastomère sans réduire la flexibilité de l'organe 16. Enfin, la fiabilité de l'adhérisation sur les armatures 20 est accrue sensiblement.

Le coulissement de l'ensemble peut être limité par butée élastique silencieuse en fin de course de compression du bout 32 de l'arbre 2 contre un plot élastique 33 logé dans un fond 34 fermant le fût 12 du côté opposé du bord ouvert 23. La limitation d'extension peut être obtenue selon la présente invention par butée d'un jonc 35 logé dans une gorge usinée dans l'arbre 2 et venant appuyer sur la bague d'arrêt 30 de retenue de la bague de guidage 25.

Le rôle des armatures telles que 20 est :
- d'assurer un centre d'oscillation "b" stable en réduisant la compressibilité radiale de l'anneau élastique ;
- de protéger, par les bords des armatures 20, les anneaux élémentaires 19 d'élastomère inclus entre lesdites armatures 20, à l'égard des agressions extérieures ;
- de maintenir axialement l'élastomère malgré la pression centrifuge du lubrifiant contenu à l'intérieur du joint, qui peut être élevée ;
- de dissiper l'échauffement prenant naissance dans l'élastomère en raison de l'hystérésis.

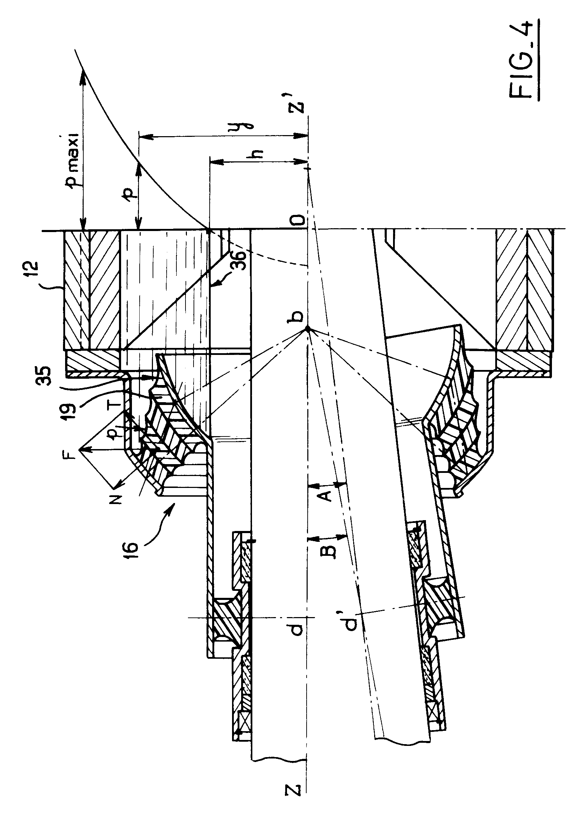

Le mode de réalisation représenté à la figure 4 diffère essentiellement du précédent en ce que le nombre d'armatures 20 a été accru afin de réduire l'épaisseur des anneaux d'élastomère 19.

On obtient ainsi une plus grande fixité du centre d'oscillation naturel b du raccord tubulaire 15 et une meilleure résistance à la pression centrifuge interne du lubrifiant ainsi qu'une meilleure protection contre les agressions de corps étrangers.

En service, le lubrifiant tend à se placer à la périphérie intérieure du joint. Il a alors une surface cylindrique telle que 36. La variation de pression centrifuge "p" au sein du lubrifiant de niveau h mesuré depuis l'axe en service est représentée en fonction de la distance y à l'axe de rotation ZZ' du fût 12.

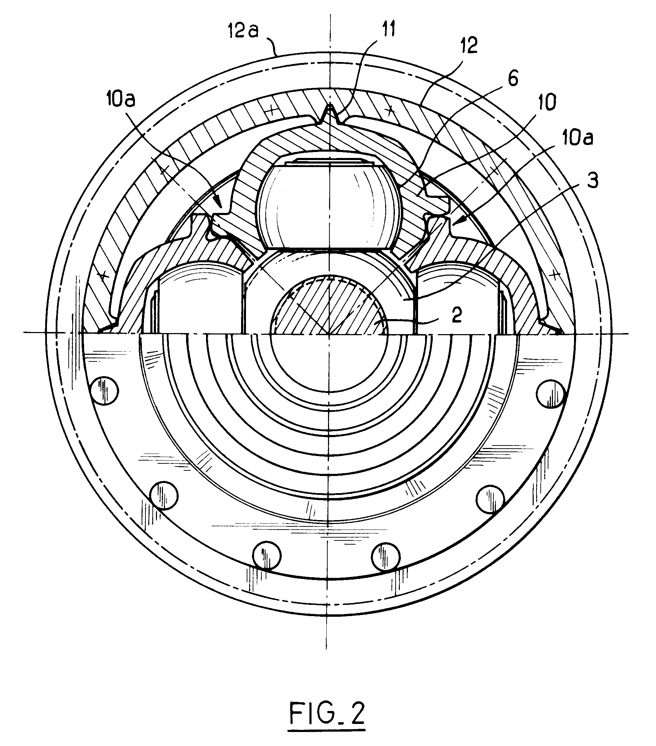

On voit que l'ensemble du mécanisme est immergé dans le lubrifiant sous pression, l'articulation 11 du dôme de couloir (figure 2) recevant la pression maximum.

L'intérieur du fourreau 17 est noyé dans le lubrifiant pendant les périodes d'arrêt.

La force centrifuge F s'exerçant sur la masse de l'élastomère en raison de sa rotation autour de l'axe ZZ' a une composante N passant par le centre b et perpendiculaire aux cloisonnements, et une composante T parallèle aux cloisonnements et dirigée vers l'intérieur du fût 12.

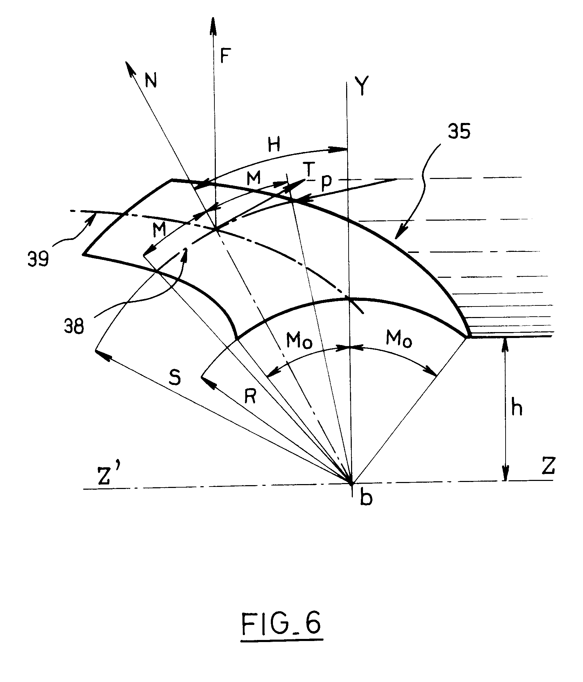

la figure 6 représente schématiquement l'action des forces appliquées à l'arc médian 38 de l'anneau d'élastomère 35 de centre sphérique b et de rayon S. Le demi-angle d'ouverture de l'arc est M et l'angle de conicité H.

Selon une disposition avantageuse de l'invention, les angles M et H sont choisis en fonction du rayon sphérique S de telle manière que la pression centrifuge P du lubrifiant s'exerçant sur la face latérale interne de l'anneau compense exactement la tendance de l'élastomère à fluer selon la direction de la composante T sous l'effet de la force centrifuge.

Ainsi la contrainte tangentielle d'adhérence de l'élastomère sur les armatures résultant de la force centrifuge est annulée.

De plus, l'angle d'ouverture M est tel que, selon cette disposition de l'invention, la contrainte tangentielle due à la flexion est égale pour chaque anneau, et minimum pour un angle de flexion donné de l'organe flexible.

Compte tenu de la conicité on a :

$$M = \frac{M_0\,R^3}{2\,S^3 \cos^3 H\,(tg^2H + 1/2)}$$

La ligne médiane 39 des anneaux est définie en coordonnées polaires par l'angle H et le rayon S, par la relation:

$$\cos^2(H - M) - 4\,(D/d)\sin M \cos H \sin H - (R^2/S^2)\cos^2 M_0 = 0$$

La fraction D/d est le rapport de la densité de l'élastomère à la densité du lubrifiant.

R et $M_0$ sont les valeurs théoriques prises par S et M respectivement pour H = 0. Par ailleurs, on a :

$$h = R \cos M_0.$$

Dans l'exemple de la figure 6 on a choisi pour valeur minimum de H un angle d'environ 30° pour réduire l'encombrement de l'organe élastique vers l'intérieur du joint. De même, la valeur maximum de H dépend de l'espace disponible extérieurement et des impératifs de débattement du joint.

Cette compensation de la force centrifuge est conservée pour toutes les vitesses de rotation.

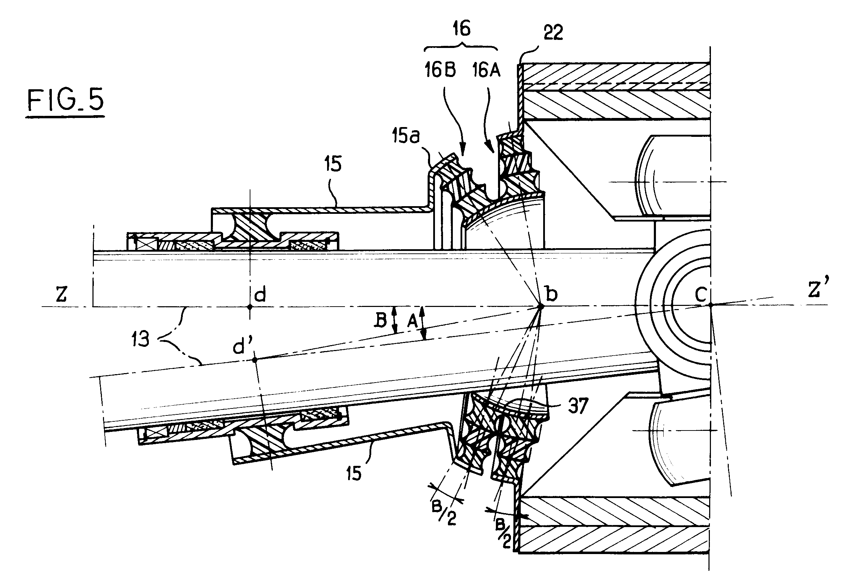

Le mode de réalisation représenté sur la figure 5 diffère essentiellement des précédents en ce que l'organe annulaire 16 comprend deux organes annulaires élémentaires 16A, 16B similaires, montés en série.

Ainsi, chacun d'eux ne supporte que la moitié de l'angle de flexion global "B". Une bague sphérique intermédiaire 37, centrée en b, oscille autour du centre "b" de la moitié de l'angle B fait par le raccord tubulaire 15 avec l'axe ZZ' du fût 12. La bague intermédiaire 37 constitue la partie de l'organe 16 qui est la plus proche de l'arbre 2 et peut même servir de butée de débattement angulaire pour l'arbre 2 comme représenté en bas de la figure 5. Les chocs sur cette butée sont amortis par l'élastomère qui la supporte. Les deux organes annulaires élémentaires 16A, 16B et la bague sphérique intermédiaire 37 ont ensemble un profil en forme de V ouvert radialement vers l'extérieur. L'un des organes élémentaires 16A est monté entre le flasque 22 et la bague intermédiaire 37.

L'autre organe élémentaire 16B est monté entre l'organe élémentaire 37 et la première extrémité, épanouie, 15a du raccord 15.

La disposition à deux organes élémentaires permet de diviser par deux le taux de déformation tangentielle de l'élastomère et ainsi de limiter le travail de fatigue et d'accroître la longévité du dispositif de protection.

En résumé, cette invention permet de réaliser la protection et la lubrification fiable et durable des joints homocinétiques de grande dimensions et/ou tournant à vitesse élevée. Elle permet donc l'utilisation de joints introduisant l'homocinétie parfaite de conduite ainsi que le très libre coulissement dans des applications exigeant une très grande durée de vie sans entretien, applications réservées jusqu'ici aux seuls cardans beaucoup moins performants puisque non homocinétiques, non coulissants et plus encombrants.

**Revendications**

1. Dispositif de protection et de retenue de lubrifiant pour joint de transmission (1) articulé, notamment joint homocinétique, comprenant un élément extérieur et un élément intérieur relié à un arbre (2), l'élément extérieur ayant un bord ouvert autour de l'arbre, caractérisé en ce qu'il comprend un raccord tubulaire rigide étanche (15) qui entoure l'arbre (2) avec un jeu radial et qui a une première extrémité (15a) reliée par une première articulation étanche (16) au bord ouvert (23) de l'élément extérieur (12) et une deuxième extrémité (15b), éloignée du bord ouvert, et reliée, par une deuxième articulation étanche (17, 18), coulissante, à l'arbre, lequel se débat axialement et angulairement dans le raccord en fonction de l'angle de travail (B) du joint.

2. Dispositif selon la revendication 1, caractérisé en ce que la première articulation a un centre (b) situé à l'intérieur du premier élément (12).

3. Dispositif selon la revendication 1 ou 2, caractérisé en ce que l'une au moins des articulations comprend, pour permettre le débattement angulaire, un organe annulaire déformable (16, 18).

4. Dispositif selon la revendication 1 ou 2, caractérisé en ce que la première articulation comprend au moins un organe annulaire déformable (16), de section sensiblement trapézoïdale s'élargissant vers l'axe (ZZ').

5. Dispositif selon la revendication 1 ou 2, caractérisé en ce que l'articulation extérieure comprend au moins un organe annulaire déformable (16) comprenant un empilement d'anneaux élémentaires coaxiaux (19) avec le premier élément (12) lorsque le joint est en ligne, et adhérisés sur au moins un cloisonnement métallique mince (20) en forme de tronc de cône ou de zone sphérique, évasé vers l'intérieur du premier élément.

6. Dispositif selon la revendication 5, caractérisé en ce que la largeur des anneaux élastiques élémentaires (19) est decroissante depuis un anneau intérieur jusqu'à un anneau extérieur de manière à répartir équitablement la déformation élastique tangentielle sur chacun de ces anneaux (19), cette largeur étant sensiblement inversement proportionnelle au carré de leur rayon sphérique centré sur l'axe (ZZ) du premier élément (12).

7. Dispositif selon l'une des revendications 4 à 6, caractérisé en ce qu'un anneau élémentaire (19), extérieur de l'organe annulaire (16) est adhérisé ou fixé sur une face interne sensiblement sphérique (21) d'un flasque (22) fixé au bord ouvert (23) du premier élément (12).

8. Dispositif selon l'une des revendications 4 à 7 caractérisé en ce qu'un anneau élémentaire (19) terminal de l'organe élastique est fixé sur une face de la première extrémité (15a) du raccord tubulaire, qui est épanouie vers l'intérieur du premier élément.

9. Dispositif selon l'une des revendications 4 à 8, caractérisé en ce que le premier organe élastique (16) comprend deux organes annulaires élémentaires (16A, 16B) dont les sections transversales ont ensemble sensiblement la forme d'un V, ouvert radialement vers l'extérieur.

10. Dispositif selon la revendication 9, caractérisé en ce que les deux organes annulaires élémentaires (16A, 16B) sont reliés l'un à l'autre en étant fixés à un élément intermédiaire rigide (37).

11. Dispositif selon l'une des revendications 1 ou 2, caractérisé en ce que la première articulation est réalisée au moyen d'un organe annulaire déformable (16) ayant sensiblement une section en forme de V dont une extrémité est fixée au moins indirectement au bord ouvert (23) et l'autre extrémité est fixée au raccord tubulaire (15).

12. Dispositif selon la revendication 1 ou 2, caractérisé en ce que la première articulation comprend un organe annulaire déformable (16) ayant, vers l'intérieur du premier élément (12), une face tournée obliquement vers l'extérieur par rapport à l'axe (ZZ') du premier élément.

13. Dispositif selon la revendication 12, caractérisé en ce que l'organe annulaire (16) est composé de plusieurs anneaux (19) dont la force centrifuge équilibre la pression d'origine centrifuge (p) exercée par le lubrifiant sur la face de l'anneau adjacente à l'intérieur du joint, pour un niveau dynamique nominal (36) du lubrifiant dans le joint.

14. Dispositif selon l'une des revendications 2 à 13, caractérisé en ce qu'un angle (G) séparant les centres (b, d) des articulations vus depuis un centre de la section de l'organe annulaire élastique (16) de la première articulation est sensiblement égal à 90°.

15. Dispositif selon l'une des revendications 1 ou 2, caractérisé en ce que la deuxième articulation comprend un fourreau (17) monté de manière étanche et coulissante sur l'arbre, et un organe annulaire (18) déformable élastiquement fixé au fourreau et à la seconde extrémité libre (15b) au raccord tubulaire (15).

16. Dispositif selon la revendication 15, caractérisé en ce que l'organe annulaire (18) est de section sensiblement trapézoïdale avec une grande base tournée vers l'axe de l'arbre.

17. Dispositif selon la revendication 15 ou 16, caractérisé en ce que l'organe annulaire (18) reçoit d'une part intérieurement le fourreau coulissant (17) qui lui est solidaire par l'intermédiaire d'une gorge de périphérie (24) ménagée sur ledit fourreau (17) et d'autre part, extérieurement, la deuxième extrémité libre (15b) du raccord tubulaire (15), auquel il est fixé.

18. Dispositif selon l'une des revendications 15 à 17, caractérisé en ce que la paroi intérieure du fourreau coulissant (17) est un alésage garni de deux bagues de guidage (25 ; 26) en matériau anti-friction coulissant sur la surface de l'arbre (2), ledit alésage comportant au moins une garniture d'étanchéité (28), et, à son extrémité externe, une garniture de protection (27).

19. Joint de transmission articulée comprenant un élément extérieur comprenant un fût (12) et quatre couloirs (10) oscillant contre une paroi intérieure du fût (12) et s'ouvrant vers un axe (ZZ') du fût, ces quatre couloirs étant accouplés entre eux pour osciller en opposition de phase, et un élément intérieur comprenant un croisillon dont quatre bras (5) sont engagés chacun de manière mobile dans l'un des couloirs, caractérisé en ce que le joint est équipé d'un dispositif de protection selon l'une des revendications 1 à 18.

FIG_1

FIG. 2

FIG.3

EP 0 540 422 A1

FIG_4

FIG.5

EP 0 540 422 A1

FIG.6

Office européen
des brevets

**RAPPORT DE RECHERCHE EUROPEENNE**

Numero de la demande

EP 92 40 2940

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | WO-A-8 103 210 (F.S.A.S.)<br>--- | | F 16 D 3/84 |
| A,D | FR-A-2 566 858 (UNI-CARDAN)<br>--- | | |
| A | BE-A- 480 973 (J. DEVILLE)<br>----- | | |

**DOMAINES TECHNIQUES RECHERCHES (Int. Cl.5)**

F 16 D

Le présent rapport a été établi pour toutes les revendications

| Lieu de la recherche | Date d'achèvement de la recherche | Examinateur |
|---|---|---|
| LA HAYE | 25-01-1993 | BEGUIN-ADRIAENSSENS C P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)